# EUROPÄISCHE PATENTSCHRIFT

(11) **EP 1 911 542 B1**
(45) Veröffentlichungstag und Bekanntmachung des Hinweises auf die Patenterteilung: **22.06.2011**
(21) Anmeldenummer: 07019108.5
(22) Anmeldetag: 28.09.2007
(51) Int. Cl.: B23K 33/00

(54) **Bauelement mit zwei senkrecht zueinander stehenden Blechplatten**
Module with two metal sheets perpendicular to each other
Composant doté de deux plaques de tôles verticales l'une par rapport à l'autre

(30) Priorität: 09.10.2006 DE 102006048019
(43) Veröffentlichungstag der Anmeldung: 16.04.2008
(73) Patentinhaber: Raith Maschinenbau GmbH, 71254 Ditzingen-Heimerdingen (DE)
(72) Erfinder: Piller, Thomas, 71254 Ditzingen (DE)
(74) Vertreter: Fleck, Hermann-Josef

(56) Entgegenhaltungen:
- DE-C1- 19 907 926
- FR-A1- 2 698 030
- FR-A1- 2 789 609
- US-A- 6 131 286

## Beschreibung

Die Erfindung betrifft ein Bauelement gemäß dem Oberbegriff des Anspruchs 1, mit zwei senkrecht zueinander stehenden Blechplatten, die in einer Verbindungslinie mittels einer Reihe von Schweißstellen fest miteinander verbunden sind, wobei Steckzungen der anderen Blechplatte in Steckschlitze der einen Blechplatte eingeführt sind und die Schweißstellen die Blechplatten in der Verbindungsstellung festhalten, wobei im Bereich der Verbindungslinie der einen Blechplatte eine Reihe von Steckschlitzen in einer Teilung eingeschnitten sind und wobei an der Außenseite der anderen Blechplatte in gleicher Teilung ausgeschnittene Steckzungen gebildet sind, die in ihrer Breite auf die Länge der Steckschlitze der einen Blechplatte abgestimmt sind.

Ein dreidimensionales Bauelement dieser Art ist aus der DE 199 07 926 C1 bekannt. Dabei sind die Steckschlitze und die Steckzungen in gleicher Teilung eingebracht und nach dem Zusammenstecken der Blechplatten werden die Blechplatten im Bereich der Verbindungslinie miteinander verschweißt. Maßnahmen zur Verhinderung von Längsausdehnungen durch die Schweißnaht sind hier nicht vorgesehen, da sie für bestimmte Anwendungsfälle auch nicht zwingend erforderlich sind.

Einen ähnlichen Aufbau eines Bauelementes aus zwei senkrecht miteinander verbundenen Blechplatten zeigt die FR-A 2 789 609. Auch dieser Aufbau sieht keine besondere Ausgestaltung der Blechplatte im Bereich der Steckschlitze vor und auch die Schweißstellen sind nicht angesprochen. Mehr offenbart auch die US-A 6,131,286 nicht.

Schließlich zeigt die FR-A 2 698 030, wie Blechplatten in ein kastenförmiges Gehäuse als Trennplatten eingesetzt werden. Dabei weisen die Trennplatten Steckzungen auf, die in Steckschlitze des kastenförmigen Gehäuses eingesteckt und durch das zusammengebaute Gehäuse ohne Verschweißung gehalten sind.

Einen ähnlichen Aufbau eines Maschinenteils in Schweißkonstruktion zeigt auch die DE 44 12 005 A1. Die Schweißnähte verlaufen längs der Blechplatten und verbinden jeweils die senkrecht aufeinander stoßenden Längsseitenbereiche der beiden Blechplatten. Ein Ausgleich der Verformungen durch den Schweißvorgang ist auch bei diesem Maschinenteil nicht vorgesehen und zudem tragen die Schweißnähte auf, was bei einem exakte Abmessungen einhaltenden Bauelement nicht tragbar ist.

Es ist Aufgabe der Erfindung, ein Bauelement mit zwei senkrecht zueinander stehenden Blechplatten der eingangs erwähnten Art zu schaffen, dass mit äußerst geringen Längstoleranzen in Schweißkonstruktion kostengünstig hergestellt werden kann und dabei störende Schweißstellen oder Schweißnähte vermeidet, die am fest verbundenen Bauelement vorstehen.

Diese Aufgabe wird nach der Erfindung dadurch gelöst, dass die Steckschlitze beidseitig von senkrecht zur Verbindungslinie der Blechplatte,gerichteten Querschlitzen begrenzt und kleine Bereiche um die Steckschlitze von der Blechplatte abgeteilt sind, und dass die Steckzungen mittels der Schweißstellen fest mit den Steckschlitzen verbunden sind, wobei die Schweißstellen im Bereich der senkrecht zu der Verbindungslinie der Blechplatte gerichteten und aneinander anliegenden Seiten der Steckschlitze und der Seitenabschnitte der Steckzungen vorgesehen sind.

Die an der einen Blechplatte abgeteilten Bereiche mit den Steckschlitzen bilden in Richtung der Verbindungslinie kleine Gebilde, die mit den Steckzungen verschweißt werden. Die Querschlitze fangen eventuelle Verformungen auf, so dass sich auch bei vielen Schweißstellen keine Auswirkungen auf die vorgegebene exakte Längsabmessung des verschweißten Bauelementes ergeben. Durch die Verlagerung der Schweißstellen in den Bereich der parallel zu den Querschlitzen verlaufenden Seiten der Steckschlitze und die daran anliegenden Seitenabschnitte der Steckzungen kann die Verschweißung ohne störenden Auftrag auf den Oberflächen der Blechplatten erfolgen.

Mit den Steckschlitzen und Steckzungen wird ein Biegevorgang an den Blechplatten vermieden, so dass schon dadurch keine sich auf die Toleranz auswirkenden Verformungen auftreten können. Die Einbringung von Steckschlitzen mit Querschlitzen und die Vorsehung von Steckzungen können z. B. mittels Laser exakt in gleicher Teilung mit kleinster Toleranz eingeschnitten und ausgeschnitten werden. Da die Verschweißung nur im Bereich der Steckzungen und den kleinen, durch die Querschlitze abgeteilten Bereiche um die Steckschlitze erfolgt, kann der Verzug durch Erwärmung beim Schweißen durch die Querschlitze abgefangen und von der übrigen Blechplatte ferngehalten werden. Die Ausgangsabmessungen der Blechplatten werden selbst bei großen Abmessungen daher durch das Schweißen nicht mehr beeinflusst, so dass die aus Blechplatten kostengünstig hergestellten Bauelemente mit sehr kleinen Toleranzen im Maschinenbau eingesetzt werden können.

Die Passierung der Steckzungen in den Steckschlitzen wird nach einer Ausgestaltung dadurch verbessert, dass die Eckbereiche der Steckschlitze mittels konkaver Rundungen ausgespart sind und dass die Steckzungen über konkave Übergänge in die Außenseite der anderen Blechplatte übergehen und im Bereich der parallel zur Außenseite verlaufenden Stirnseiten konvex gewölbte Übergänge aufweisen.

Nach einer Weiterbildung ist vorgesehen, dass die senkrecht zur Verbindungslinie gerichteten Querschlitze der einen Blechplatte die parallelen Seiten der Steckschlitze überragen. Dabei können die Querschlitze etwa um die Breite der Steckschlitze diese überragen.

Eine bündige Verbindung kann daher dadurch erreicht werden, dass die Stecktiefe der Steckzungen und die Breite der Steckschlitze der gleichen Stärke der Blechplatten entsprechen. Die Steckzungen ragen dann nicht aus den Steckschlitzen und schließen bündig mit den Bereichen der Blechplatte um die Steckscheibe ab.

In der einfachsten Weise können zwei so verbundene Blechplatten einen Profilabschnitt mit L-förmigem Querschnitt bilden. Die beiden Blechplatten können jedoch auch einen T-förmigen Profilabschnitt bilden, wenn die Steckschlitze von der Längsseite weg mehr zu der Mitte der Breite der einen Blechplatte verlegt werden.

Die Querschlitze erstrecken sich dann über die beiden Längsseiten der Steckschlitze hinaus und stehen parallel zu den Breitseiten der Steckschlitze. Auch dann fangen die bandförmig abgeteilten Bereiche um die Steckschlitze den Verzug beim Schwei-βen von den übrigen Bereichen der einen Blechplatte ab.

Die miteinander verbundenen Blechplatten können weitere andersartige Profilabschnitte bilden, wenn vorgesehen ist, dass drei Blechplatten mittels zwei Reihen von Verbindungen aus Steckschlitzen und Steckzungen zu einem Profilabschnitt mit U-förmigem Querschnitt miteinander verbunden sind oder dass vier Blechplatten mittels vier Reihen von Verbindungen aus Steckschlitzen und Steckzungen zu einem vierkantigen Hohl-Profilabschnitt miteinander verbunden sind.

Nach einer Weiterbildung der Verbindung lässt sich dabei erreichen, dass mindestens eine offene Stirnseite des Hohl-Profilabschnittes mittels einer Deckplatte verschlossen ist, die mittels vier Reihen von Verbindungen aus Steckschlitzen und Steckzungen mit den vier Blechplatten des Hohl-Profilabschnittes verbunden ist oder dass beide offene Seiten des Hohl-Profilabschnittes mit Deckplatten verschlossen sind und mit dem Hohl-Profilabschnitt ein geschlossenes Gehäuse bilden oder dass die Eckbereiche der Steckschlitze mittels konkaver Rundungen ausgespart sind.

Die Erfindung wird anhand eines in den Zeichnungen dargestellten Ausführungsbeispiels eines L-förmigen Profilabschnitts näher erläutert. Es zeigen:
- Fig. 1: einen Rand-Teilbereich einer Blechplatte mit einer Reihe von Steckscheiben entlang einer Längsseite,
- Fig. 2: einen Rand-Teilbereich einer Blechplatte mit einer Reihe von an einer Längsseite ausgeschnittenen Steckzungen,
- Fig. 3: in perspektivischer Teilsansicht eine Steckverbindung zwischen einem Steckschlitz der einen Blechplatte nach Fig. 1 und einer Steckzunge einer anderen Blechplatte nach Fig. 2,
- Fig. 4: in vergrößerter Draufsicht die Steckverbindung nach Fig. 3 und
- Fig. 5: in vergrößertem Teilausschnitt die Steckverbindung mit der in den Steckschlitz der einen Blechplatte eingeführten Steckzunge der anderen Blechplatte.

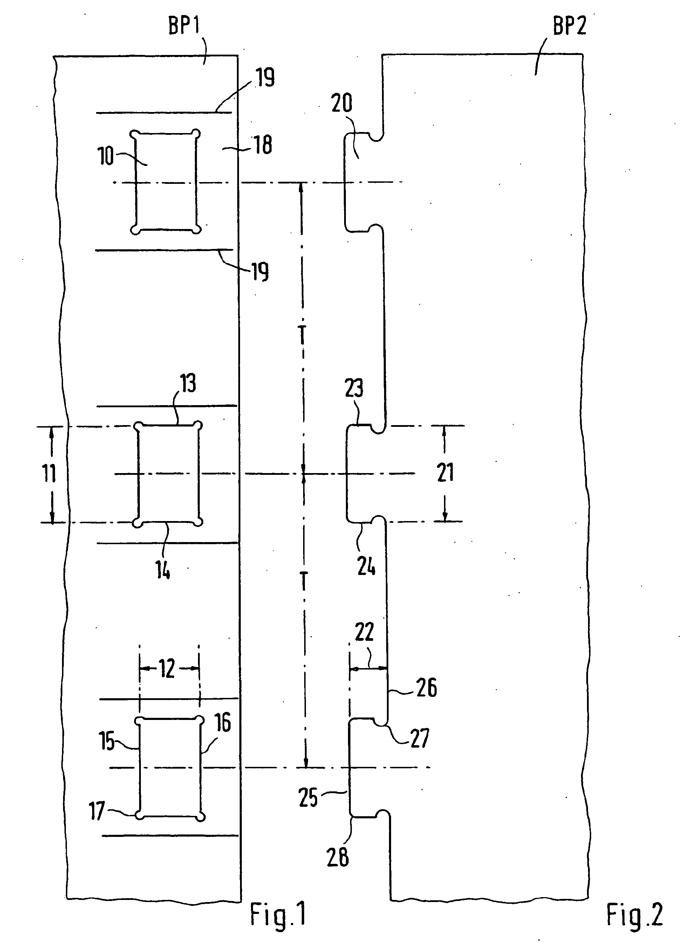

Wie die Fig. 1 zeigt, sind in einer Blechplatte BP1 in kleinem Abstand zu einer Längsseite in vorgegebener Teilung T eine Reihe von Steckschlitzen 10 eingebracht, die mit ihren Längsseiten 15 und 16 in Längsrichtung der Blechplatte BP1 ausgerichtet sind und daher parallel zu der gezeigten Längsseite verlaufen. Die Breitseiten 13 und 14 der Steckschlitze 10 stehen senkrecht zu der Längsseite der Blechplatte BP1. Die Übergänge von den Breitseiten 13 und 14 zu den Längsseiten 15 und 16 sind in den Eckbereichen der Steckschlitze 10 mit konkaven Rundungen 17 ausgespart. Dies erleichtert zum einen das Ausschneiden mittels Laser und zum anderen die Anpassung an einem rechteckförmigen Querschnitt der Steckzungen 20 der anderen Blechplatte BP2 nach Fig. 2 sowie den Schweißvorgang.

Die Breitseiten 13 und 14 bestimmen die Länge 11 und die Längsseiten 15 und 16 die Breite 12 der Steckschlitze 10. Zu beiden Seiten der Steckschlitze 10 teilen Querschlitze 19 einen zungenförmigen kleinen Bereich 18 um den Steckschlitz 10 ab. Dabei sind diese Querschlitze 19 über die Steckschlitze 10 hinaus verlängert und überragen diese etwa um die Breite 12 der Steckschlitze 10. Die Breite 12 der Steckschlitze 10 entspricht dabei der Stärke der Blechplatte BP2.

Wie Fig. 2 zeigt, sind an einer Längsseite der Blechplatte BP2 in derselben Teilung T ebenfalls mit Laser Steckzungen 20 ausgeschnitten, die in die Steckschlitze 10 der Blechplatte BP1 eingesteckt werden können, wenn die Blechplatte BP2 senkrecht zur Blechplatte BP1 gestellt wird.

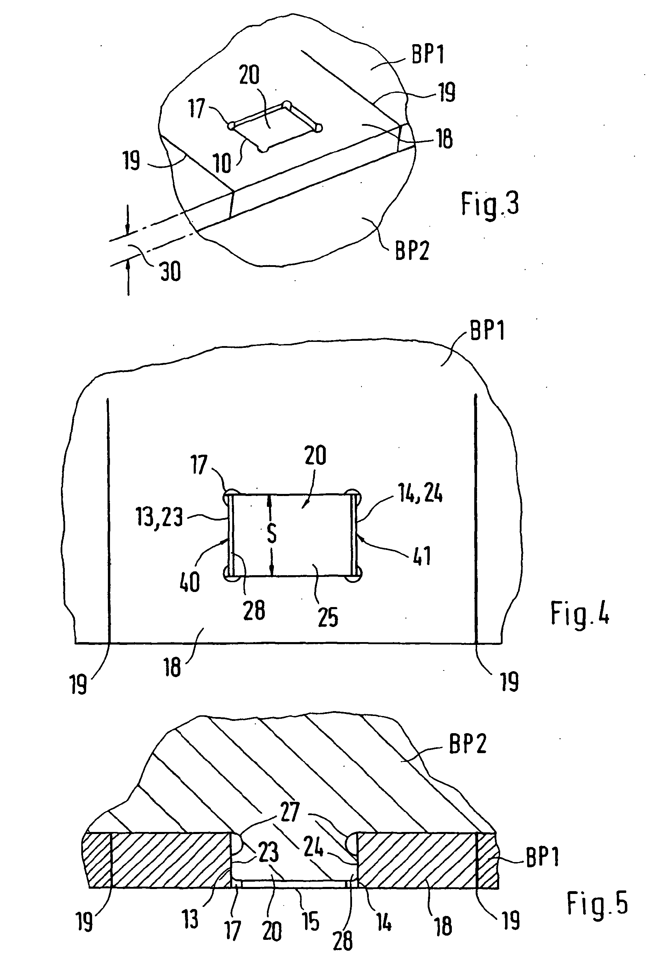

Die Steckzungen 20 stehen mit der Stirnseite 25 um die Stecktiefe 22 an der Längsseite 26 der Blechplatte BP2 vor, die normalerweise an die Stärke der Blechplatte BP1 angepasst ist, da damit eine bündige Steckverbindung erreicht werden kann und die Steckzungen 20 nicht aus den Steckschlitzen 10 ragen. Die Breite 21 der Steckzungen 20 wird durch die senkrecht zur Längsseite 26 stehenden Seitenabschnitte 23 und 24 der Steckzungen 20 bestimmt und entspricht exakt der Länge 11 der Steckschlitze 10. Für eine bündige Steckverbindung ist die Breite 12 der Längsschlitze 10 in der Regel jedoch an die gleiche Stärke S der Blechplatten BP1 und BP2 angepasst, wie der Ansicht nach Fig. 3 zu entnehmen ist. Die Stirnseite 25 der Steckzungen 20 sind dann bündig mir der Oberseite der Blechplatte BP1 und die Rundungen 17 der Steckschlitze 10 geben dem rechtwinkligen Querabschnitt der Steckzungen 20 im Bereich der Seitenabschnitte 23 und 24 genügend Freiraum.

Wie die Fig. 4 zeigt, füllt die Steckzunge 20 den Steckschlitz 10 voll aus, wenn die Breite 12 des Steckschlitzes 10 der Stärke S der Blechplatte BP2 entspricht. Die Fig. 3 und 4 lassen auch den durch die Querschlitze 19 und die Steckschlitze 10 abgeteilten zungenförmigen Bereich 18 der Blechplatte BP1 erkennen.

Werden im Bereich der aneinander anliegenden Breitseiten 13 und 14 der Steckschlitze 10 und der Seitenabschnitte 23 und 24 der Steckzungen 20 die Schweißstellen 40 und 41 angebracht, dann fangen die Querschlitze 19 den durch die Erwärmung bedingten Verzug der Bereiche 18 ab und halten diesen von den übrigen Bereichen der Blechplatten BP1 und BP2 ab.

Die Stirnseite 15 der Steckzungen 20 kann gegenüber der Oberfläche der Blechplatte BP1 auch etwas zurückgesetzt sein, wie dem Teilschnitt nach Fig. 5 zu entnehmen ist. Die Stirnseite 25 kann konvex abgerundete Übergänge 28 in die Seitenabschnitte 23 und 24 der Steckzunge 20 aufweisen, so dass das Einstecken in den Steckschlitz 10 erleichtert ist. Zudem gehen diese Seitenabschnitte 23 und 24 ebenfalls über konkave Übergänge 27 in die Längsseite 26 der Blechplatte BP2 über, um die Passung der Steckzunge 20 im Steckschlitz 10 nicht zu beeinträchtigen.

Die am Beispiel eines L-förmigen Profilabschnitts aus zwei Blechplatten BP1 und BP2 erläuterte Verbindung kann auch abgewandelt werden, wenn die Steckscheiben 10 in den mittleren Bereich der Breite der Blechplatte verlegt werden. Es entsteht dann ein mehr oder weniger T-förmiger Profilabschnitt. Die über beide Längsseiten der Steckschlitze 10 hinaus verlängerten Querschlitze 19 teilen dann bandförmige Bereiche 18 um die Breitseiten 13 und 14 der Steckschlitze 10 ab.

Mit mehreren Reihen von Steckverbindungen aus Steckschlitzen 10 und Steckzungen 20 lassen sich auch U-förmige Profilabschnitte, Vierkantförmige Hohl-Profilabschnitte und zusammengesetzte Maschinengestelle und Maschinengehäuse herstellen, wobei die Übergänge der senkrecht aufeinander stoßenden Blechplatten jeweils, eine erfindungsgemäße Verbindung aus Steckschlitzen und Steckzungen erfordern.

## Patentansprüche

1. Bauelement mit zwei senkrecht zueinander stehenden Blechplatten (BP1, BP2), die in einer Verbindungslinie mittels einer Reihe von Schweißstellen (40, 41) fest miteinander verbunden sind, wobei Steckzungen (20) der anderen Blechplatte (BP2) in Steckschlitze (10) der einen Blechplatte (BP1) eingeführt sind und die Schweißstellen (40, 41) die Blechplatten (BP1, BP2) in der Verbindungsstellung festhalten, wobei im Bereich der Verbindungslinie der einen Blechplatte (BP1) eine Reihe von Steckschlitzen (10) in einer Teilung (T) eingeschnitten sind und wobei an der Außenseite der anderen Blechplatte (BP2) in gleicher Teilung (T) ausgeschnittene Steckzungen (20) gebildet sind, die in ihrer Breite auf die Länge der Steckschlitze (10) der einen Blechplatte (BP1) abgestimmt sind,
**dadurch gekennzeichnet,**
**dass** die Steckschlitze (10) beidseitig von senkrecht zur Verbindungslinie der Blechplatte (BP1) gerichteten Querschlitzen (19) begrenzt und kleine Bereiche (18) um die Steckschlitze (10) von der Blechplatte (BP1) abgeteilt sind, und
**dass** die Steckzungen (20) mittels der Schweißstellen (40, 41) fest mit den Steckschlitzen (10) verbunden sind, wobei die Schweißstellen (40, 41) im Bereich der senkrecht zu der Verbindungslinie der Blechplatten (BP1, BP2) gerichteten und aneinander anliegenden Seiten (13, 14) der Steckschlitze (10) und der Seitenabschnitte (23, 24) der Steckzungen (20) vorgesehen sind.

2. Bauelement nach Anspruch 1,
**dadurch gekennzeichnet,**
**dass** die Steckschlitze (10) mit den Querschlitzen (19) und die Steckzungen (20) mittels Laser aus den Blechplatten (BP1, BP2) geschnitten sind.

3. Bauelement nach Anspruch 1 und 2,
**dadurch gekennzeichnet,**
**dass** die Eckbereiche der Steckschlitze (10) mittels konkaver Rundungen (17) ausgespart sind.

4. Bauelement nach einem der Ansprüche 1 bis 3,
**dadurch gekennzeichnet,**
**dass** die Steckzungen (20) über konkave Übergänge (27) in die Außenseite (26) der anderen Blechplatte (BP2) übergehen und im Bereich der parallel zur Außenseite (26) verlaufenden Stirnseiten (25) konvex gewölbte Übergänge (28) aufweisen.

5. Bauelement nach einem der Ansprüche 1 bis 4,
**dadurch gekennzeichnet,**
**dass** die senkrecht zur Verbindungslinie gerichteten Querschlitze (19) der einen Blechplatte (BP1) die parallelen Seiten (13, 14) der Steckschlitze (10) überragen.

6. Bauelement nach Anspruch 5,
**dadurch gekennzeichnet,**
**dass** die Querschlitze (19) etwa um die Breite (12) der Steckschlitze (10) diese überragen.

7. Bauelement nach einem der Ansprüche 1 bis 6,
**dadurch gekennzeichnet,**
**dass** die Stecktiefe (22) der Steckzungen (20) und die Breite (12) der Steckschlitze (10) der gleichen Stärke (S) der Blechplatten (BP1, BP2) entsprechen.

8. Bauelement nach einem der Ansprüche 1 bis 7,
**dadurch gekennzeichnet,**
**dass** die beiden Blechplatten (BP1, BP2) einen Profilabschnitt mit L-förmigem Querschnitt bilden.

9. Bauelement nach einem der Ansprüche 1 bis 7,
**dadurch gekennzeichnet,**
**dass** drei Blechplatten mittels zwei Reihen von Verbindungslinien aus Steckschlitzen und Steckzungen zu einem Profilabschnitt mit U-förmigem Querschnitt miteinander verbunden sind.

10. Bauelement nach einem der Ansprüche 1 bis 7,
**dadurch gekennzeichnet,**
**dass** vier Blechplatten mittels vier Reihen von Verbindungslinien aus Steckschlitzen und Steckzungen zu einem vierkantigen Hohl-Profilabschnitt miteinander verbunden sind.

11. Bauelement nach Anspruch 10,
**dadurch gekennzeichnet,**
**dass** mindestens eine offene Stirnseite des Hohl-Profilabschnittes mittels einer Deckplatte verschlossen ist, die mittels vier Reihen von Verbindungslinien aus Steckschlitzen und Steckzungen mit den vier Blechplatten des Hohl-Profilabschnittes verbunden ist.

12. Bauelement nach Anspruch 11,
**dadurch gekennzeichnet,**
**dass** beide offene Seiten des Hohl-Profilabschnittes mit Deckplatten verschlossen sind und mit dem Hohl-Profilabschnitt ein geschlossenes Gehäuse bilden.

13. Bauelement nach Anspruch 1,
**dadurch gekennzeichnet,**
**dass** die Steckschlitze (10) der einen Blechplatte (BP1) im Bereich der Breite der Blechplatte (BP1) verlaufen,
**dass** die Querschlitze (19) über beide Längsseiten (15, 16) der Steckschlitze (10) hinausragen und bandförmige Bereiche (18) um die Steckschlitze (10) an der Blechplatte (BP1) abteilen und
**dass** die beiden Blechplatten (BP1, BP2) T-förmig miteinander verbunden sind.

14. Bauelement nach Anspruch 1,
**dadurch gekennzeichnet,**
**dass** mehrere Blechplatten über erfindungsgemäße Verbindungslinien zu einem Maschinengestell und/oder Maschinengehäuse untereinander verbunden sind.

## Claims

1. Module having two metal sheets (BP1, BP2) which lie perpendicularly with respect to one another and are connected fixedly to one another in a connecting line by means of a row of welded points (40, 41), plug-in tongues (20) of the other metal sheet (BP2) being introduced into plug-in slots (10) of one metal sheet (BP1) and the welded points (40, 41) holding the metal sheets (BP1, BP2) fixedly in the connecting position, a row of plug-in slots (10) being cut out at a spacing (T) in the region of the connecting line of one metal sheet (BP1), and cut-out plug-in tongues (20) being formed at the same spacing (T) on the outer side of the other metal sheet (BP2), the width of which plug-in tongues (20) is adapted to the length of the plug-in slots (10) of one metal sheet (BP1), **characterized in that** the plug-in slots (10) are delimited on both sides by transverse slots (19) which are directed perpendicularly with respect to the connecting line of the metal sheet (BP1), and small regions (18) around the plug-in slots (10) are separated by the metal sheet (BP1), and **in that** the plug-in tongues (20) are connected fixedly to the plug-in slots (10) by means of the welded points (40, 41), the welded points (40, 41) being provided in the region of the side sections (23, 24) of the plug-in tongues (20) and those sides (13, 14) of the plug-in slots (10) which are directed perpendicularly with respect to the connecting line of the metal sheets (BP1, BP2) and bear against one another.

2. Module according to Claim 1, **characterized in that** the plug-in slots (10) with the transverse slots (19) and the plug-in tongues (20) are cut from the metal sheets (BP1, BP2) by means of laser.

3. Module according to Claims 1 and 2, **characterized in that** the corner regions of the plug-in slots (10) are cut out by means of concave curves (17).

4. Module according to one of Claims 1 to 3, **characterized in that** the plug-in tongues (20) merge via concave transitions (27) into the outer side (26) of the other metal sheet (BP2) and have convexly arched transitions (28) in the region of the end sides (25) which extend parallel to the outer side (26).

5. Module according to one of Claims 1 to 4, **characterized in that** the transverse slots (19) of one metal sheet (BP1) which are directed perpendicularly with respect to the connecting line protrude beyond the parallel sides (13, 14) of the plug-in slots (10).

6. Module according to Claim 5, **characterized in that** the transverse slots (19) protrude beyond the plug-in slots (10) approximately by the width (12) of the said plug-in slots (10).

7. Module according to one of Claims 1 to 6, **characterized in that** the plug-in depth (22) of the plug-in tongues (20) and the width (12) of the plug-in slots (10) correspond to the identical thickness (S) of the metal sheets (BP1, BP2).

8. Module according to one of Claims 1 to 7, **characterized in that** the two metal sheets (BP1, BP2) form a profile section with an L-shaped cross section.

9. Module according to one of Claims 1 to 7, **characterized in that** three metal sheets are connected to one another by means of two rows of connecting lines comprising plug-in slots and plug-in tongues to form a profile section with a U-shaped cross section.

10. Module according to one of Claims 1 to 7, **characterized in that** four metal sheets are connected to one another by means of four rows of connecting lines comprising plug-in slots and plug-in tongues to form a tetragonal hollow profile section.

11. Module according to Claim 10, **characterized in that** at least one open end side of the hollow profile section is closed by means of a covering plate which is connected to the four metal sheets of the hollow profile section by means of four rows of connecting lines comprising plug-in slots and plug-in tongues.

12. Module according to Claim 11, **characterized in that** both open sides of the hollow profile section are closed with covering plates and form a closed housing with the hollow profile section.

13. Module according to Claim 1, **characterized in that** the plug-in slots (10) of one metal sheet (BP1) extend in the region of the width of the metal sheet (BP1), **in that** the transverse slots (19) protrude beyond both longitudinal sides (15, 16) of the plug-in slots (10) and separate belt-shaped regions (18) around the plug-in slots (10) on the metal sheet (BP1), and **in that** the two metal sheets (BP1, BP2) are connected to one another in a T-shaped manner.

14. Module according to Claim 1, **characterized in that** a plurality of metal sheets are connected among one another via connecting lines according to the invention to form a machine frame and/or machine housing.

## Revendications

1. Composant doté de deux plaques de tôle (BP1, BP2) perpendiculaires qui sont reliées fixement entre elles pour former une ligne de jonction à l'aide d'une rangée de points de soudure (40, 41), les languettes d'enfichage (20) de l'autre plaque de tôle (BP2) étant introduites dans les fentes d'enfichage (10) de la première plaque de tôle (BP1) et les points de soudure (40, 41) maintenant fixement les plaques de tôle (BP1, BP2) dans la position de jonction, une rangée de fentes d'enfichage (10) étant taillée de façon à former une division (T) dans la zone de la ligne de jonction de la première plaque de tôle (BP1) et des languettes d'enfichage (20) taillées dans la même division (T) étant formées au niveau du côté extérieur de l'autre plaque de tôle (BP2), lesdites languettes étant accordées dans leur largeur sur la longueur des fentes d'enfichage (10) de la première plaque de tôle (BP1) ;
**caractérisé en ce que** :
les fentes d'enfichage (10) sont délimitées des deux côtés par des fentes transversales (19) orientées perpendiculairement par rapport à la ligne de jonction de la plaque de tôle (BP1) et des petites zones (18) sont retirées de la plaque de tôle (BP1) autour des fentes d'enfichage (10) ; et
**en ce que** les languettes d'enfichage (20) sont reliées fixement aux fentes d'enfichage (10) à l'aide des points de soudure (40, 41), les points de soudure (40, 41) étant prévus dans la zone des côtés (13, 14) des fentes d'enfichage (10) et des segments latéraux (23, 24) des languettes d'enfichage (20) orientés perpendiculairement par rapport à la ligne de jonction des plaques de tôle (BP1, BP2) et reposant les uns contre les autres.

2. Composant selon la revendication 1, **caractérisé en ce que** les fentes d'enfichage (10) sont découpées avec les fentes transversales (19) et les languettes d'enfichage (20) à partir des plaques de tôle (BP1, BP2) au moyen d'un laser.

3. Composant selon la revendication 1 et 2, **caractérisé en ce que** les zones de coin des fentes d'enfichage (10) sont évidées à l'aide d'arrondis (17) concaves.

4. Composant selon l'une quelconque des revendications 1 à 3, **caractérisé en ce que** les languettes d'enfichage (20) ressortent au-delà des passages (27) concaves dans le côté extérieur (26) de l'autre plaque de tôle (BP2) et comportent, dans la zone des faces frontales (25) s'étendant parallèlement au côté extérieur (26), des passages (28) bombés de façon convexe.

5. Composant selon l'une quelconque des revendications 1 à 4, **caractérisé en ce que** les fentes transversales (19) de la première plaque de tôle (BP1) orientées perpendiculairement par rapport à la ligne de jonction dépassent des côtés (13, 14) parallèles des fentes d'enfichage (10).

6. Composant selon la revendication 5, **caractérisé en ce que** les fentes transversales (19) dépassent approximativement de la largeur (12) des fentes d'enfichage (10).

7. Composant selon l'une quelconque des revendications 1 à 6, **caractérisé en ce que** la profondeur d'enfichage (22) des languettes d'enfichage (20) et la largeur (12) des fentes d'enfichage (10) correspondent à la même épaisseur (S) des plaques de tôle (BP1, BP2).

8. Composant selon l'une quelconque des revendications 1 à 7, **caractérisé en ce que** les deux plaques de tôle (BP1, BP2) forment un segment de profilé présentant une section transversale en forme de L.

9. Composant selon l'une quelconque des revendications 1 à 7, **caractérisé en ce que** trois plaques de tôle sont reliées entre elles à l'aide de deux rangées de lignes de jonction composées de fentes d'enfichage et de languettes d'enfichage pour former un segment de profilé présentant une section transversale en forme de U.

10. Composant selon l'une quelconque des revendications 1 à 7, **caractérisé en ce que** quatre plaques de tôle sont reliées entre elles à l'aide de quatre rangées de lignes de jonction composées de fentes d'enfichage et de languettes d'enfichage pour former un segment de profilé creux à quatre faces.

11. Composant selon la revendication 10, **caractérisé en ce qu'**au moins une face frontale ouverte du segment de profilé creux est fermée à l'aide d'une plaque de recouvrement reliée aux quatre plaques de tôle du segment de profilé creux à l'aide de quatre rangées de lignes de jonction composées de fentes d'enfichage et de languettes d'enfichage.

12. Composant selon la revendication 11, **caractérisé en ce que** les deux côtés ouverts du segment de profilé creux sont fermés par des plaques de recouvrement et forment un boîtier fermé avec le segment de profilé creux.

13. Composant selon la revendication 1, **caractérisé en ce que** :
les fentes d'enfichage (10) de la première plaque de tôle (BP1) se situent dans la zone de la largeur de la plaque de tôle (BP1) ;
les fentes transversales (19) ressortent au-delà des deux côtés longitudinaux (15, 16) des fentes d'enfichage (10) et se divisent en zones (18) en forme de bande autour des fentes d'enfichage (10), au niveau de la plaque de tôle (BP1);et
les deux plaques de tôle (BP1, BP2) sont reliées entre elles de façon à prendre une forme de T.

14. Composant selon la revendication 1, **caractérisé en ce que** plusieurs plaques de tôle sont reliées entre elles par le biais de lignes de jonction selon l'invention pour former un châssis de machine et/ou un carter de machine.
